# EUROPEAN PATENT SPECIFICATION

(11) **EP 1 649 436 B1**
(45) Date of publication and mention of the grant of the patent: **23.01.2013**
(21) Application number: 04780550.2
(22) Date of filing: 27.07.2004
(51) Int. Cl.: G10L 15/22

(54) **SPOKEN LANGUAGE SYSTEM**
GESPROCHENE-SPRACHE-SYSTEM
SYSTEME DE LANGAGE PARLE

(30) Priority: 31.07.2003 US 631256
(43) Date of publication of application: 26.04.2006
(73) Proprietor: Motorola Solutions, Inc., Schaumburg IL 60196 (US)
(72) Inventor: TARLTON, Prakairut, Barrington, Illinois 60010 (US); CAHN, Janet, E., Arlington Heights, Illinois 60005 (US); MA, Changxue, Barrington, Illinois 60010 (US)
(74) Representative: McLeish, Nicholas Alistair Maxwell
(86) International application number: PCT/US2004/025730
(87) International publication number: WO 2005/013238

(56) References cited:
- US-A- 5 634 086
- US-A1- 2003 028 375
- US-B1- 6 453 290
- US-B1- 6 505 155
- US-B1- 6 601 029
- OVIATT S. ET AL.: 'Modeling Hyperarticulate Speech During Human-Computer Error Resolution, Proceedings' FOURTH INTERNATIONAL CONFERENCE ON SPOKEN LANGUAGE, ICSLP 96 vol. 2, 03 October 1996 - 06 October 1996, pages 801 - 804, XP010237740

## Description

### Background

A spoken language system is one in which voiced words are recognized by a device; that is, the voiced sounds are interpreted and converted to semantic content and lexical form by a recognition component of the system, and responses are made using synthesized or pre-recorded speech. Examples of such spoken language systems are some automated telephone customer service systems that interact using the customer's voice (not just key selections), and hands free vehicular control systems, such as cellular telephone dialing. In the process of interpreting the voiced sounds, some spoken language systems use confidence scores to select the semantic content and lexical form of the words that have been voiced from a dictionary or dictionaries. Such systems are known. In some such systems the system presents an estimated semantic content to the user who voiced the words, in order to verify its accuracy. The presentation of these interpreted words of the estimated semantic content is in the form of a synthesized voice in a spoken language system, but may also be presented on a display. The recognition component of a spoken language system is liable to misrecognize voiced words, especially in a noisy environment or because of speaker and audio path variations. When fine-grained precision is necessary, such as in a dial-by-voice application, the system typically requests confirmation before actually placing the call. Part of the confirmation can involve repeating back to the user what was recognized, for example, "Call Bill at home". There are some problems to overcome in order to make the system effective. First, the overall quality of speech output can be poor, especially if it is synthesized using text-to-speech rather than pre-recorded speech, as is typical in resource constrained devices such as cellular handsets. Consequently, more of the user's cognitive capacities are devoted to simply deciphering the utterance. Second, the prosody (pitch and timing) used is often appropriate only to declarative sentences. This makes it hard for the user to figure out which part of the recognized input requires correction or confirmation, and more generally, what information is key, and what is background. Last, the audio feedback can take too much time. This is particularly the case for digit dialing by voice - repeating a ten digit phone number with prosody that is conventionally used can be perceived as simply taking too long when people want to place a phone call.

Conventional spoken language systems have been able to provide successful human interaction, but the interaction is not as efficient and satisfying as it could be.

US2003/0028375 A1 discloses a method of supporting a proofreading of a speech-recognized text. A text component has a reliability level for its correctness which controls progression of the replay speed of the text synthesized to speech.

US 6,601,029 B1 discloses a spoken language system, wherein one of two or more predefined system prompts is selected and - together (i.e. filled) with recognized and re-synthesized words (representing parts of a user's spoken input) - played back to the user for confirmation. To focus the user's attention on the words most in doubt (i.e. those recognized with lowest confidence), reordering the prompt words, increasing word volume or duration and/or inserting pauses at strategic locations is proposed.

### Brief Description of the Drawings

The present invention is illustrated by way of example and not limitation in the accompanying figures, in which like references indicate similar elements, and in which:
FIG. 1 shows a block diagram of a spoken language system, in accordance with the preferred embodiment of the present invention;
FIG. 2 shows a flow chart of a method used in the spoken language system, in accordance with the preferred embodiment of the present invention;
FIG. 3 shows a chart of confidence scores for a sequence of words spoken by a user and received by the spoken language system, in accordance with the preferred embodiment of the present invention; and
FIGS. 4, 5, and 6 are illustrations to show exemplary adjustments made by the spoken language system, in accordance with the preferred embodiment of the present invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Detailed Description of the Drawings

Before describing in detail the particular spoken language system in accordance with the present invention, it should be observed that the present invention resides primarily in combinations of method steps and apparatus components related to the spoken language system. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

This invention applies to any interactive system that includes both a speech recognition and generation component, i.e., a spoken language system that supports a full mixed-initiative dialog or simple command and control interaction. This invention covers the presentation of content to the user that is not interpreted semantically, but is the system's best guess about the verbatim content of the user's spoken input.

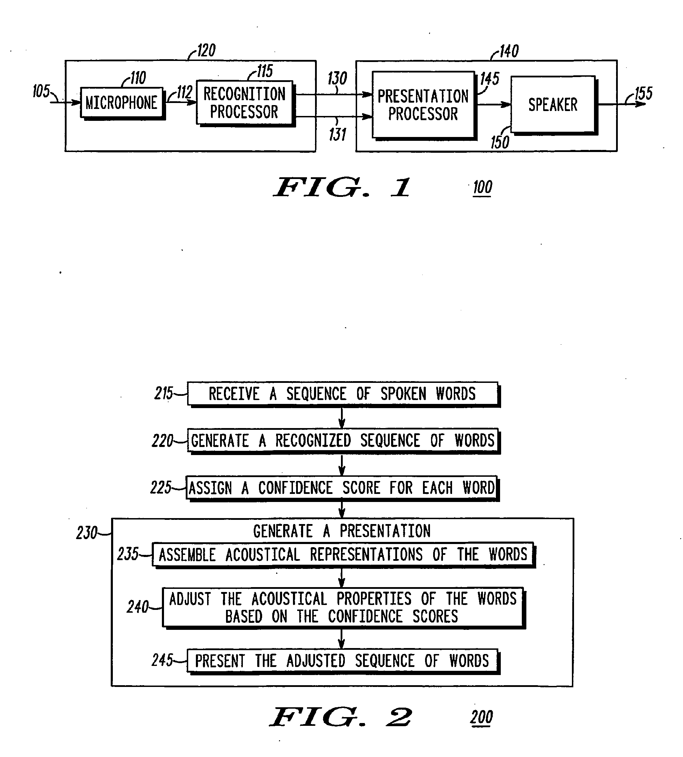

Referring to FIGS. 1 and 2, a block diagram of a spoken language system 100 (FIG. 1) and a flow chart 200 (FIG. 2) of a method used in the spoken language system 100 are shown, in accordance with the preferred embodiment of the present invention. The spoken language system 100 comprises a recognition component 120 coupled to a generation component 140. The spoken language system can be any system that relies on voice interactions, such as a cellular telephone or other portable electronic device, a home appliance, a piece of test equipment, a personal computer, and a main frame computer. The recognition component 120 comprises a microphone 110 or equivalent device for receiving and converting sounds to electrical signals, and a recognition processor 115. The recognition component 120 receives 215 (FIG. 2) a sequence of spoken words 105 that are converted to analog signals 112 by the microphone 110 and associated electronic circuitry. The recognition processor 115 generates 220 from them a recognized sequence of words 130, using conventional techniques. The recognition processor 115 assigns 225 a confidence score to each word in the recognized sequence of words 130 using conventional techniques for matching the sounds received to stored sound patterns. The recognized sequence of words 130 and an associated sequence of confidence scores 131 are coupled to the generation component 140. The generation component 140 comprises a presentation processor 145 and a speaker 150 or equivalent device. The generation component 140 generates 230 a presentation 142 of the recognized sequence of words 130 by, among other actions, assembling 235 acoustical representations of the words having ,nominal acoustical properties and adjusting 240 the acoustical properties of the words with reference to their nominal acoustical properties, according to the confidence scores of words in the sequence, when the words are part of a subsequent confirmation or clarification presentation, in order to increase or decrease the acoustical and perceptual prominence of words in the sequence. The adjusted sequence of words, or presentation 142, is then presented 245 by being amplified by appropriate electrical circuitry and transduced into sound 155 by the speaker 150.

The recognition processor 115 and the presentation processor 145 may be largely independent functions performed by a single microprocessor or by a single computer that operates under stored programmed instructions, or they may be distributed functions performed by two or more processors that are coupled together. In one embodiment, the spoken language system 100 is a portion of a cellular telephone handset that also includes a radio transceiver that establishes a phone call that is hands free dialed by use of the spoken language system, and the recognition processor 115 and the presentation processor 145 are functions in a single control processor of the cellular telephone. In this embodiment, the speaker 150 may be in addition to an earpiece speaker of the cellular telephone, and the speaker 150 may be separate from the cellular telephone handset.

The main benefit of adjusting the acoustical context of the words in the sequence is to enhance the user's experience with the spoken language system 100. For example, when a word receives a high confidence score (that is, a confidence score that indicates high confidence outside a normal confidence range, not necessarily a number that is high), the word (which is accordingly described herein as a high confidence word) probably does not require confirmation or correction from the user. Therefore, when the word is presented as part of a confirmation statement or query, the word may receive a shortened duration, a compressed pitch range and/or an imprecise enunciation. Conversely, if a word receives a low confidence score (that is, a confidence score that indicates low confidence outside a normal confidence range, not necessarily a number that is low), the adjusted acoustical properties prompt and permit the user to confirm or correct the low confidence words (i.e., the words with a low confidence score) that the spoken language system 100 may present. Thus, a presented low confidence word may receive an increased duration and/or pitch range, and/or a more precise or even exaggerated enunciation compared to nominal values for these parameters. The spoken language system 100 may even lengthen an interword pause before the low confidence word, to alert the user to a problem area, and/or after the low confidence word, to give the user time to confirm or correct it, or to cancel an action of the spoken language system (in response to a misrecognized word). For purposes of this description, all delays between words are identified as interword pauses, or just pauses, in order to simplify the description. Thus, a nominal delay between two words, which may be as short as zero milliseconds in some instances, but also may be, for example, 50 milliseconds in other instances, (and longer in some instances) is described as a nominal pause when it is the pause used in normal fluent speech. The method of the present invention applies not only to individual words - it can apply to larger units such as phrases, sentences and even an entire utterance.

The present invention addresses two problem areas in spoken language systems: (1) Focus of attention: It provides a means for drawing the user's attention to areas of uncertainty, and away from areas in which no further work is required. This supports an efficient use of the user's cognitive resources. (2) Latency: Speeding up words with high confidence scores - the overall result of prominence-reducing acoustical alterations - dramatically reduces the latency of the system response and thereby helps to minimize user frustration. This is particularly relevant to digit dialing applications, in which every digit must be correctly recognized. Since digit recognition typically attains more than 95% accuracy, most of the confidence scores will be high, and by the method of the present invention, the digits with high confidence may be sped up when repeated back to the user, reducing both latency and user frustration.

The acoustical properties of a word include acoustic features of a word that are typically altered to reduce or increase acoustical prominence are mainly duration, pitch range, intonational contour (e.g., flat, rising, falling, etc), intensity, phonation type (e.g., whisper, creaky voice, normal) and precision of articulation. The actual realization of these features depends on the method of speech presentation. When the speech presentation is provided by a text-to-speech (TTS) system, the acoustic feature adjustments are accomplished by control commands that affect the pitch, timing, intensity, and phonation characteristics such as whisper or creaky voice of the words presented. Precision of articulation is changed by the addition, substitution or deletion of phonemes. When the presentation is formed from pre-recorded speech sounds or words, direct signal manipulation (e.g., PSOLA - Pitch-synchronous overlap and add) can be applied to change pitch (F0) and timing (duration) features. Intensity is increased or decreased by multiplication of the signal amplitude. An alternative recording can also be used to achieve variation in pronunciation and phonation when the presentation is formed from pre-recorded speech sounds or words.

The acoustical properties of a word also include the acoustical context of a word or a group of words, which may be altered, namely, with interword pauses lengthened before or after a word with a low confidence score, or before or after a group of words containing a word with a low confidence score. A lengthened interword pause before (which can be optional) imitates human conversational practice, in which the speaker often hesitates before uttering a difficult word or concept. A lengthened interword pause that follows allows users to easily barge-in to correct or confirm the low-confidence word, or interrupt an action based on misrecognition.

Various combinations of the confidence score and word features can be used to determine the type, magnitude and location of the acoustical adjustments to a word and its context. In addition, these procedures may be applied to larger linguistic units such as phrases, sentences and even an entire utterance.

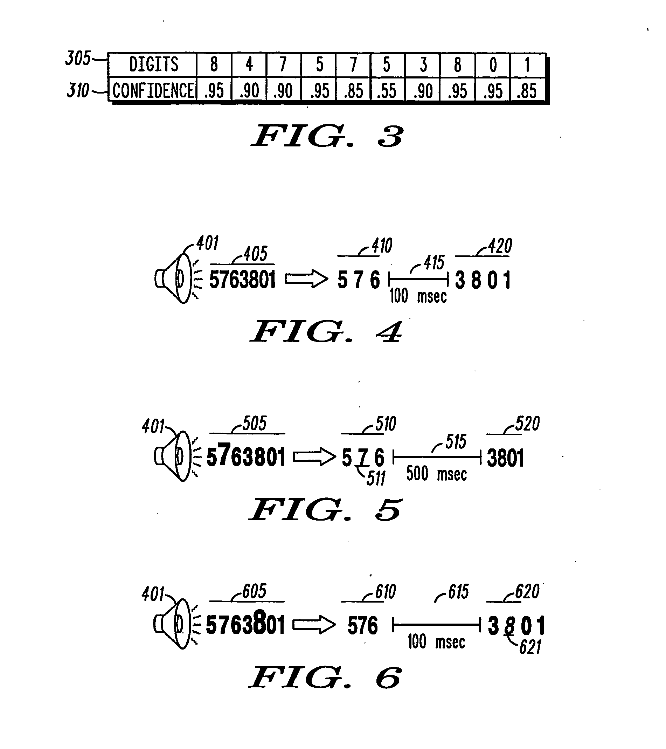

Referring to FIG. 3, a chart of confidence scores for a sequence of words spoken by a user that form a ten digit telephone number is shown, in accordance with the preferred embodiment of the present invention. The user has said: 847 576 3801. The spoken language system 100 receives and recognizes the sequence of spoken words, and calculates high confidence scores for all the digits (words) except "6", and interprets the 6 as a 5. The recognition processor interprets (makes a best estimate of the words spoken) as being the digits listed in the first row of the chart, and has assigned the confidence scores shown in the second row of the chart. Therefore, the spoken language system replies:
"Dialing 876" (presenting each of the four words quickly with shortened interword pauses)
An interword pause occurs (a nominal length used for separation of groups of dialing digits)
"57" (nominal duration of the words and the interword pause)
A lengthened interword pause occurs after the 7
"5" (slowly, with rising intonation to convey uncertainty in English)
A lengthened interword pause occurs (for the user to correct the digit or stop the Dialing action)
At this point, the user may interject "576"

As a typical result of the above sequence of actions, the system might be able to assign a high confidence score for the word (digit) in question and may then quickly present: "OK, dialing 847 576 3801". Or if the user determines that the action taken (dialing) in reaction to the spoken sequence of words is wrong (e.g., because of the error made in the interpretation of some of the words), the user can interject a command such as "Stop" to end this particular interaction. Longer commands (than "stop") might be expected in other circumstances, so the lengthening of the pause after the word could be determined by a longest of a set of predictable responses. Also, it will be appreciated that it may be appropriate to create a "correction" pause after a group of words that includes a low confidence word. For example, if the 7 in the above example was a low confidence word, it could be best to lengthen the pause presented after the group "576" instead of the pause directly after the presentation of the 7. Furthermore, the spoken language system 100 can determine during a lengthened pause that a correction word or command being received is approaching the end of a correction pause, and can lengthen the correction pause dynamically so that the user can finish a correction or command. Thus, pauses proximate to a low confidence word (that is, within a few words thereof, either before or after) are within the acoustical context of the low confidence word and may be varied from their nominal values as determined by the confidence score of the low confidence word.

Referring to FIGS. 4, 5, and 6, illustrations show exemplary adjustments made by the spoken language system 100, in accordance with the preferred embodiment of the present invention. In FIG. 4, a user symbolized by a speaker icon 401 vocalizes seven digits of a telephone number, 576 3801. The spoken language system assigns high confidence to all the received and recognized digits in the sequence, and presents the sequence using nominal pauses between the digits. The pauses are quite short except for the pause 415 between the first group of three 410 and the last group of four 420. The pause 415 is 100 milliseconds, which is representative of normal speech and the nominal pauses signify high confidence that all digits were recognized correctly. In FIG. 5, the same digits 505 are spoken, but the recognition processor 115 assigns a low confidence score to the digit 7. In this implementation of the preferred embodiment, the presentation processor 145 uses the confidence score for digit 7 and the nominal acoustic features and context of the digit 7 to determine that the duration 511 of the digit 7 should be increased, the pause 515 between the first and second groups of digits 510, 520 presented should be lengthened, and the second group of digits 520 shortened by shortening each digit and the pauses between each digit (where they are non-zero). These adjustments emphasize the low confidence word (7), provide for an interjection of a correction word, and provide an indication to the user that the words in the second group 520 are all correct. In FIG. 6, the same digits 605 are spoken, but the recognition processor 115 assigns a low confidence score to the digit 8. In this implementation of the preferred embodiment, the presentation processor 145 uses the confidence score and the nominal acoustic features and context of the digit 8 to determine that the first group of words 610 presented should be sped up, that a normal pause 615 should be used between the two groups of digits 610, 620, and that in the second group of words 620 presented, the digit 8 should be presented by applying a pitch contour that conveys contrastive stress and that a final pitch rise should be applied to the phrase (the second group of digits 620). This illustrates a feature of the present invention, which is to apply a phrase contour that conveys uncertainty for a group of words that includes a word having a confidence score below the normal range. The phrase contour can affect the acoustical properties of more than one word in the group of words. For example, in English the phrase contour can be a final pitch rise that occurs over several words at the end of the phrase. However, the phrase contour for different languages may vary in order to conform the normal usage of a specific language. Also, different acoustical property adjustments can apply to all of the acoustical properties described herein in order to provide the most benefits of the present invention among different languages.

Several pseudo code examples of varying the acoustical properties of words in a sequence of words as determined by confidence scores are given below. In these examples, confidence scores below a normal range indicate low confidence and confidence scores above the normal range indicate high confidence.
1. Changing duration only, with weighted changes for syllables of a word *In this case, word duration is changed differentially by syllable, depending on whether the syllable carries lexical stress or not - syllables with lexical stress receive more lengthening and less shortening. The syllable-based changes are relevant to stress-timed languages, such as English, but are less relevant to languages in which syllables are typically of equal length, such as Spanish.*
   if confidenceScore is
   in normalRange:
   no change in duration
   below normalRange:
   increase duration of lexically stressed syllables and then increase duration of entire word
   above normalRange:
   decrease duration of lexically unstressed syllables and then decrease duration of entire word.
2. Changing duration of a preceding pause
   *In this case, the duration of a pause that precedes a word is lengthened. This is a typical device in human conversation for alerting the listener about possible cognitive difficulties and*/*or the significance of the word to follow. In this example, the length of the pause reflects the confidence score and the kind of information that follows. For example, if the following word is a digit, it needs to be recognized with sufficient confidence.* if confidenceScore is below normalRange and also very low
   calculate length of precedingPause based on confidenceScore and info type
   insert precedingPause before word.
3. Changing duration of a following pause
   *Lengthen a pause after the word.*
   if confidenceScore is below normalRange and also very low
   if interjection is permitted,
   calculate length of followingPause based on confidenceScore and info type
   insert pause of followingPauseLength after word.
4. Changing multiple acoustical properties
   if confidenceScore is
   in normalRange:

   no change
   below normalRange:
   increase duration
   if TTS then increase enunciation by phoneme deletion, substitution or addition
   above normalRange:
   decrease duration
   if TTS out, then reduce enunciation by phoneme deletion, substitution or addition
   reduce pitch range;
   if confidenceScore is below normalRange and also very low
   calculate length of precedingPause based on confidenceScore and info type
   insert precedingPause before word; and
   if confidenceScore is below normalRange and also very low
   if interjection is permitted,
   calculate length of followingPause based on confidenceScore and info type
   insert pause of followingPauseLength after word.

It should be noted that although the unique technique described above improves the efficiency of accurate voice recognition, while making it a more satisfying experience for most users without adding words to the phrase, there may be circumstances in which the above described techniques may be beneficially combined with conventional techniques that change a sequence of words, such as by adding explanatory or interrogatory words to the phrase.

In the foregoing specification, the invention and its benefits and advantages have been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

A "set" as used herein, means a non-empty set (i.e., for the sets defined herein, comprising at least one member). The term "another", as used herein, is defined as at least a second or more. The terms "including" and/or "having", as used herein, are defined as comprising. The term "coupled", as used herein with reference to electro-optical technology, is defined as connected, although not necessarily directly, and not necessarily mechanically. The term "program", as used herein, is defined as a sequence of instructions designed for execution on a computer system. A "program", or "computer program", may include a subroutine, a function, a procedure, an object method, an object implementation, an executable application, an applet, a servlet, a source code, an object code, a shared library/dynamic load library and/or other sequence of instructions designed for execution on a computer system.

## Claims

1. A method for a spoken language system, comprising:
generating a recognized sequence of words from a sequence of received spoken words input by a user of the spoken language system;
assigning a confidence score to each word in the recognized sequence of words; and
adjusting acoustical properties of words, wherein said acoustical properties include the acoustical context of words, in an audible presentation of the recognized sequence of words, the adjustment performed according to the confidence score of each word,
**characterized by**
adjusting the audible presentation using a lengthened interword pause proximate to a word having a low confidence score, wherein the lengthened interword pause is recognizably greater than interword pauses otherwise used for words having a confidence score within a predetermined range of confidence scores above said low confidence score.

2. The method according to claim 1, wherein the lengthened interword pause is inserted directly following the word having a low confidence score.

3. The method according to claim 1, wherein the lengthened interword pause is inserted after a group of words that includes the word having a low confidence score.

4. The method according to claim 1, wherein the lengthened interword pause is inserted following the word having a low confidence score, and the duration of the lengthened interword pause is determined based on an amount by which the low confidence score indicates a confidence below the predetermined range.

5. The method according to claim 1, wherein the lengthened interword pause is inserted following the word having a low confidence score, and a duration of the lengthened interword pause is determined based on a likely duration of a corrective response from the user.

6. The method according to claim 5, wherein the likely duration of the corrective response is one of a duration of a button press and a duration of the words predicted to be spoken during the lengthened interword pause.

7. The method according to claim 1, wherein the lengthened interword pause is inserted directly preceding the word having a low confidence score.

8. The method according to claim 7, wherein the duration of the lengthened interword pause is increased for words having confidence scores lower than said low confidence score.

9. The method according to claim 1, wherein adjusting comprises:
modifying a value of one or more of a set of acoustical features for a word having a confidence score outside of said predetermined range.

10. The method according to claim 9, wherein the set of acoustical features comprises interword pause, duration, pitch range, intonational contour, intensity, phonation type, and precision of articulation.

11. The method according to claim 9, wherein the modifying comprises at least one of:
increasing at least one of the interword pause, the duration of the word, the pitch range of the word, the loudness of the word, and the precision of articulation of the word when the confidence score indicates a confidence level lower than the confidence levels indicated by the confidence scores of said predetermined range ; and
decreasing at least one of the interword pause, the duration of the word, the pitch range of the word, the loudness of the word, and the precision of articulation of the word when the confidence score indicates a confidence level higher than the confidence levels indicated by the confidence scores of said predetermined range.

12. The method according to claim 9, wherein the set of acoustical features further comprises a duration change of each syllable of the word, and wherein a differential change of the duration of each syllable is determined by a lexical stress parameter of the syllable.

13. The method according to claim 9, wherein adjusting comprises:
adjusting the audible presentation using a phrase contour that conveys uncertainty within a group of words that includes a word having a confidence score below the predetermined range.

14. A spoken language system, comprising:
a recognition component configured to generate a recognized sequence of words from a sequence of received spoken words input by a user of the spoken language system, and to assign a confidence score to each word in the recognized sequence of words; and
a presentation component that is configured to adjust acoustical properties of words, wherein said acoustical properties include the acoustical context of words, in an audible presentation of the recognized sequence of words, the adjustment performed according to the confidence score of each word,
**characterized in that**
the presentation component is configured to adjust the audible presentation using a lengthened interword pause proximate to a word having a low confidence score, wherein the lengthened interword pause is recognizably greater than interword pauses otherwise used for words having a confidence score within a predetermined range of confidence scores above said low confidence score.

15. A portable electronic device, comprising:
a radio transceiver configured to establish a telephone call; and
the spoken language system according to claim 14.

## Patentansprüche

1. Verfahren für ein System für gesprochene Sprache, das umfasst:
Erzeugen einer erkannten Sequenz von Wörtern aus einer Sequenz von empfangenen gesprochenen Wörtern, die durch einen Anwender des Systems für gesprochene Sprache eingegeben werden;
Zuweisen einer Vertrauensnote zu jedem Wort in der erkannten Sequenz von Wörtern; und
Einstellen von akustischen Eigenschaften von Wörtern, wobei die akustischen Eigenschaften den akustischen Inhalt von Wörtern in einer hörbaren Präsentation der erkannten Sequenz von Wörtern umfassen, wobei die Einstellung entsprechend der Vertrauensnote eines jeden Wortes durchgeführt wird,
**gekennzeichnet durch**
Einstellen der hörbaren Präsentation unter Verwendung einer ausgedehnten Zwischenwortpause in der Nähre eines Wortes, das über eine niedrige Vertrauensnote verfügt, wobei die ausgedehnte Zwischenwortpause erkennbar größer als Zwischenwortpausen ist, die anderenfalls für Wörter verwendet werden, die über eine Vertrauensnote verfügen, die in einem vorbestimmten Bereich von Vertrauensnoten oberhalb der niedrigen Vertrauensnote liegt.

2. Verfahren gemäß Anspruch 1, wobei die ausgedehnte Zwischenwortpause direkt auf das Wort folgend eingesetzt wird, das über eine niedrige Vertrauensnote verfügt.

3. Verfahren gemäß Anspruch 1, wobei die ausgedehnte Zwischenwortpause nach einer Gruppe von Wörtern eingesetzt wird, die das Wort umfasst, das über eine niedrige Vertrauensnote verfügt.

4. Verfahren gemäß Anspruch 1, wobei die ausgedehnte Zwischenwortpause im Anschluss an das Wort eingesetzt wird, das über eine niedrige Vertrauensnote verfügt, und die Dauer der ausgedehnten Zwischenwortpause basierend auf einer Höhe, durch die die niedrige Vertrauensnote anzeigt, dass ein Vertrauen unter dem vorbestimmten Bereich liegt, bestimmt wird.

5. Verfahren gemäß Anspruch 1, wobei die ausgedehnte Zwischenwortpause im Anschluss an das Wort eingesetzt wird, das über eine niedrige Vertrauensnote verfügt, und die Dauer der ausgedehnten Zwischenwortpause basierend auf eine wahrscheinliche Dauer einer korrigierenden Antwort von dem Anwender bestimmt wird.

6. Verfahren gemäß Anspruch 5, wobei die wahrscheinliche Dauer der korrigierenden Antwort aus einer Dauer eines Tastendrucks und einer Dauer, die erforderlich ist, um die vorhergesagten Wörter während der ausgedehnten Zwischenwortpause auszusprechen, besteht.

7. Verfahren gemäß Anspruch 1, wobei die ausgedehnte Zwischenwortpause dem Wort direkt vorangehend eingesetzt wird, das über eine niedrige Vertrauensnote verfügt.

8. Verfahren gemäß Anspruch 7, wobei die Dauer der ausgedehnten Zwischenwortpause für Wörter verlängert wird, die über eine niedrigere Vertrauensnote als die niedrige Vertrauensnote verfügen.

9. Verfahren gemäß Anspruch 1, wobei ein Einstellen umfasst:
Modifizieren eines Wertes eines oder mehrerer aus einem Satz von akustischen Merkmalen für ein Wort, das über eine Vertrauensnote verfügt, die außerhalb des vorbestimmten Bereiches liegt.

10. Verfahren gemäß Anspruch 9, wobei der Satz von akustischen Merkmalen umfasst: Zwischenwortpause, Dauer, Tonhöhenbereich, Intonationsprofil, Intensität, Phonationstyp und Genauigkeit einer Artikulation.

11. Verfahren gemäß Anspruch 9, wobei das Modifizieren umfasst:
Verlängern der Zwischenwortpause, Verlängern der Dauer des Wortes, Erweitern des Tonhöhenbereiches des Wortes, Erhöhen der Lautstärke des Wortes und/oder Erhöhen der Genauigkeit einer Artikulation des Wortes, wenn die Vertrauensnote einen Vertrauenspegel anzeigt, der niedriger als die Vertrauenspegel ist, die durch die Vertrauensnoten des vorbestimmten Bereiches angezeigt werden; und
Verkürzen der Zwischenwortpause, Verkürzen der Dauer des Wortes, Verringern des Tonhöhenbereiches des Wortes, Verringern der Lautstärke des Wortes und/oder Verringern der Genauigkeit einer Artikulation des Wortes, wenn die Vertrauensnote einen Vertrauenspegel anzeigt, der höher als die Vertrauenspegel ist, die durch die Vertrauensnoten des vorbestimmten Bereiches angezeigt werden.

12. Verfahren gemäß Anspruch 9, wobei der Satz von akustischen Merkmalen weiterhin umfasst: eine Veränderung der Dauer von jeder Silbe des Wortes und wobei eine unterschiedliche Änderung der Dauer von jeder Silbe durch einen lexikalischen Stressparameter der Silbe bestimmt wird.

13. Verfahren gemäß Anspruch 9, wobei ein Einstellen umfasst:
Einstellen der hörbaren Präsentation unter Verwendung eines Phrasenprofils, das eine Unsicherheit in einer Gruppe von Wörtern vermittelt, die ein Wort umfasst, das über eine Vertrauensnote verfügt, die unter dem vorbestimmten Bereich liegt.

14. System für gesprochene Sprache, das umfasst:
eine Erkennungskomponente, die konfiguriert ist, um eine erkannte Sequenz von Wörtern aus einer Sequenz von empfangenen gesprochenen Wörtern zu erzeugen, die durch einen Anwender des Systems für gesprochene Sprache eingegeben werden, und um jedem Wort in der erkannten Sequenz von Wörtern eine Vertrauensnote zuzuweisen; und
eine Präsentationskomponente, die konfiguriert ist, um akustische Merkmale von Wörtern in eine hörbare Präsentation der erkannten Sequenz von Wörtern einzustellen, wobei die akustischen Merkmale den akustischen Kontext von Wörtern umfassen und die Einstellung entsprechend der Vertrauensnote eines jeden Wortes durchgeführt wird,
**dadurch gekennzeichnet, dass**
die Präsentationskomponente konfiguriert ist, um die hörbare Präsentation unter Verwendung einer ausgedehnten Zwischenwortpause in der Nähe eines Wortes einzustellen, das über eine niedrige Vertrauensnote verfügt, wobei die ausgedehnte Zwischenwortpause erkennbar länger als Zwischenwortpausen ist, die anderenfalls für Wörter verwendet werden, die über eine Vertrauensnote verfügen, die innerhalb eines vorbestimmten Bereiches von Vertrauensnoten über der niedrigen Vertrauensnote liegen.

15. Tragbare elektronische Vorrichtung, die umfasst:
einen Funktransceiver, der konfiguriert ist, um einen Telefonanruf einzurichten; und
das System für gesprochene Sprache gemäß Anspruch 14.

## Revendications

1. Procédé pour un système de traitement du langage parlé, comprenant les étapes consistant à :
générer une séquence de mots reconnue à partir d'une séquence de mots parlés reçus introduits par un utilisateur du système de traitement du langage parlé ;
attribuer un score de confiance à chaque mot de la séquence de mots reconnue ; et
ajuster des propriétés acoustiques des mots, lesquelles propriétés acoustiques comprennent le contexte acoustique des mots, dans une présentation audible de la séquence de mots reconnue, l'ajustement étant effectué en fonction du score de confiance de chaque mot,
**caractérisé par** l'étape consistant à :
ajuster la présentation audible au moyen d'une pause inter-mots rallongée à proximité d'un mot ayant un score de confiance bas, la pause inter-mots rallongée étant manifestement plus grande que les pauses inter-mots utilisées par ailleurs pour les mots ayant un score de confiance dans une plage prédéterminée de scores de confiance supérieurs audit score de confiance bas.

2. Procédé selon la revendication 1, dans lequel la pause inter-mots rallongée est insérée directement après le mot ayant un score de confiance bas.

3. Procédé selon la revendication 1, dans lequel la pause inter-mots rallongée est insérée après un groupe de mots qui comprend le mot ayant un score de confiance bas.

4. Procédé selon la revendication 1, dans lequel la pause inter-mots rallongée est insérée après le mot ayant un score de confiance bas, et la durée de la pause inter-mots rallongée est déterminée en fonction d'une quantité selon laquelle le score de confiance bas indique une confiance inférieure à la plage prédéterminée.

5. Procédé selon la revendication 1, dans lequel la pause inter-mots rallongée est insérée après le mot ayant un score de confiance bas, et une durée de la pause inter-mots rallongée est déterminée en fonction d'une durée probable d'une réponse corrective par l'utilisateur.

6. Procédé selon la revendication 5, dans lequel la durée probable de la réponse corrective est l'une d'une durée d'appui sur un bouton et d'une durée des mots dont la prononciation est attendue pendant la pause inter-mots rallongée.

7. Procédé selon la revendication 1, dans lequel la pause inter-mots rallongée est insérée directement avant le mot ayant un score de confiance bas.

8. Procédé selon la revendication 7, dans lequel la durée de la pause inter-mots rallongée est augmentée pour les mots ayant des scores de confiance inférieurs audit score de confiance bas.

9. Procédé selon la revendication 1, dans lequel l'ajustement comprend :
la modification d'une valeur d'une ou plusieurs d'un ensemble de caractéristiques acoustiques pour un mot ayant un score de confiance en dehors de ladite plage prédéterminée.

10. Procédé selon la revendication 9, dans lequel l'ensemble de caractéristiques acoustiques comprend la pause inter-mots, la durée, la plage de tessiture, le contour d'intonation, l'intensité, le type de phonation, et la précision d'articulation.

11. Procédé selon la revendication 9, dans lequel la modification comprend au moins l'une des étapes suivantes :
augmentation d'au moins l'une des caractéristiques que sont la pause inter-mots, la durée du mot, la plage de tessiture du mot, l'intensité du mot et la précision d'articulation du mot, lorsque le score de confiance indique un niveau de confiance inférieur aux niveaux de confiance indiqués par les scores de confiance de ladite plage prédéterminée ; et
diminution d'au moins l'une des caractéristiques que sont la pause inter-mots, la durée du mot, la plage de tessiture du mot, l'intensité du mot et la précision d'articulation du mot, lorsque le score de confiance indique un niveau de confiance supérieur aux niveaux de confiance indiqués par les scores de confiance de ladite plage prédéterminée.

12. Procédé selon la revendication 9, dans lequel l'ensemble de caractéristiques acoustiques comprend en outre une durée de changement de chaque syllabe du mot, et dans lequel un changement différentiel de la durée de chaque syllabe est déterminé par un paramètre d'accentuation lexicale de la syllabe.

13. Procédé selon la revendication 9, dans lequel l'ajustement comprend :
l'ajustement de la présentation audible au moyen d'un contour de phrase qui communique une incertitude dans un groupe de mots qui comprend un mot ayant un score de confiance inférieur à la plage prédéterminée.

14. Système de traitement du langage parlé, comprenant :
un composant de reconnaissance configuré pour générer une séquence de mots reconnue à partir d'une séquence de mots parlés reçus introduits par un utilisateur du système de traitement du langage parlé, et pour attribuer un score de confiance à chaque mot de la séquence de mots reconnue ; et
un composant de présentation qui est configuré pour ajuster des propriétés acoustiques des mots, lesquelles propriétés acoustiques comprennent le contexte acoustique des mots, dans une présentation audible de la séquence de mots reconnue, l'ajustement étant effectué en fonction du score de confiance de chaque mot,
**caractérisé en ce que**
le composant de présentation est configuré pour ajuster la présentation audible au moyen d'une pause inter-mots rallongée à proximité d'un mot ayant un score de confiance bas, la pause inter-mots rallongée étant manifestement plus grande que les pauses inter-mots utilisées par ailleurs pour les mots ayant un score de confiance dans une plage prédéterminée de scores de confiance supérieurs audit score de confiance bas.

15. Dispositif électronique portable, comprenant :
un émetteur-récepteur radio configuré pour établir un appel téléphonique ; et
le système de traitement du langage parlé selon la revendication 14.
